# EUROPEAN PATENT APPLICATION

(11) **EP 4 644 081 A1**
(43) Date of publication of application: **05.11.2025**
(21) Application number: 23936657.8
(22) Date of filing: 09.08.2023
(51) Int. Cl.: B29C 43/12, B29C 43/56, B29C 53/04, B29C 70/44, B29C 70/46

(54) **SHAPING DEVICE AND SHAPING METHOD**

(30) Priority: 11.05.2023 JP 2023078708
(71) Applicant: Mitsubishi Heavy Industries, Ltd., Tokyo 100-8332 (JP)
(72) Inventor: OKUMURA, Yukihiro, Tokyo 100-8332 (JP); MATSUOKA, Jun, Tokyo 100-8332 (JP); MORI, Ryo, Tokyo 100-8332 (JP); NOMA, Kazuki, Tokyo 100-8332 (JP); OTA, Shinsuke, Tokyo 100-8332 (JP)
(74) Representative: Studio Torta S.p.A.
(86) International application number: PCT/JP2023/029201
(87) International publication number: WO 2024/232109

(57) **Abstract**

Provided is a forming device (100) comprising: a forming mold (10) that has a first forming member (11) and a second forming member (12); a first membrane (20) that is disposed at a position opposing a second region (R2) adjacent to a first region (R1), has one end fixed to the second forming member (12), and has the other end fixed to a first prescribed position (P1); a bladder that forms a sealed space; and a decompression unit (50) that decompresses the sealed space. The first forming member (11) has a first contact surface (11a) that is brought into contact with the first region (R1) of a laminate (200) and extends along the width direction (WD), and a first forming surface (11b) that is inclined at a first prescribed angle (θ1) with respect to the width direction (WD). The decompression unit (50) executes, by decompressing the sealed space, a forming operation of causing a first surface (201) of the laminate (200) to be pressed against the first forming surface (11b) by the first membrane (20) brought into contact with a second surface (202) of the laminate (200) to bend the laminate (200).

## Description

### Technical Field

The present disclosure relates to a forming device that forms a laminate obtained by laminating a plurality of sheet materials including reinforcing fibers and to a forming method.

### Background Art

A composite structural member used in an aircraft, an automobile, or the like has a certain cross-sectional shape, and as a method of manufacturing the composite structural member, there is known a method of pressing a laminate that is obtained by laminating a plurality of sheet materials including reinforcing fibers into a forming mold and forming the laminate to obtain a target shape (for example, refer to PTLS 1 and 2). PTLS 1 and 2 disclose that the laminate is disposed in the forming mold having a Z-shaped cross section, the laminate is sealed with a vacuum bag, and a space sealed with the vacuum bag is decompressed, thereby forming the laminate into a Z shape.

### Citation List

### Patent Literature

[PTL 1] United States Patent No. 11155069
[PTL 2] Japanese Unexamined Patent Application Publication No. 2020-93416

### Summary of Invention

### Technical Problem

Meanwhile, in the forming method of PTL 1, in a recessed region of the forming mold, a pressurizing force of the laminate to the forming mold by decompressing the space sealed with the vacuum bag is reduced compared to other regions, and it is difficult to faithfully bend the laminate along a shape of the forming mold. In particular, in a case where an area of the laminate that is not in contact with the forming mold before decompression by the vacuum bag and is pressed against the forming mold and is formed after a start of the decompression by the vacuum bag is large, there is a possibility that wrinkles occur in the laminate after the forming.

The present disclosure has been made in view of such circumstances and an object thereof is to provide a forming device and a forming method with which it is possible to faithfully bend a laminate along a shape of a forming mold.

### Solution to Problem

A forming device according to an aspect of the present disclosure is a forming device that forms a laminate obtained by laminating a plurality of sheet materials including reinforcing fibers, the forming device including: a forming mold that has a first forming member for forming a first surface of the laminate and a second forming member for forming a second surface of the laminate and that sandwiches a first region of the laminate between the first forming member and the second forming member to form the first region into a shape along a prescribed direction; a first forming sheet that is disposed at a position facing a second region adjacent to the first region, that has one end fixed to the second forming member, and that has the other end fixed to a first prescribed position; a sealing sheet that covers the forming mold to which the first forming sheet is attached to form a sealed space; and a decompression unit that decompresses the sealed space to press the first forming sheet into the forming mold via the sealing sheet, in which the first forming member has a first contact surface that is brought into contact with the first region of the laminate and that extends along the prescribed direction, and a first forming surface that is inclined at a first prescribed angle with respect to the prescribed direction, and the decompression unit decompresses the sealed space to execute a forming operation of pressing the first surface of the laminate against the first forming surface with the first forming sheet brought into contact with the second surface of the laminate to bend the laminate.

A forming method according to an aspect of the present disclosure forms a laminate obtained by laminating a plurality of sheet materials including reinforcing fibers via a forming device, in which the forming device includes a forming mold that has a first forming member for forming a first surface of the laminate and a second forming member for forming a second surface of the laminate and that sandwiches a first region of the laminate between the first forming member and the second forming member to form the first region into a shape along a prescribed direction, a first forming sheet that is disposed at a position facing a second region adjacent to the first region, that has one end fixed to the second forming member, and that has the other end fixed to a first prescribed position, and a sealing sheet that covers the forming mold to which the first forming sheet is attached to form a sealed space, and a first contact surface that is brought into contact with the first region of the laminate and that extends along the prescribed direction and a first forming surface that is inclined at a first prescribed angle with respect to the prescribed direction are provided, the method including: a forming step of decompressing the sealed space to press the first forming sheet into the forming mold via the sealing sheet, in which in the forming step, the sealed space is decompressed to execute a forming operation of pressing the first surface of the laminate against the first forming surface with the first forming sheet brought into contact with the second surface of the laminate to bend the laminate.

### Advantageous Effects of Invention

According to the present disclosure, it is possible to provide a forming device and a forming method with which it is possible to faithfully bend a laminate along a shape of a forming mold.

### Brief Description of Drawings

Fig. 1 is a cross-sectional view that shows a forming device according to a first embodiment of the present disclosure and that shows a state before a laminate is installed in a forming mold.
Fig. 2 is a cross-sectional view of the laminate shown in Fig. 1.
Fig. 3 is a cross-sectional view that shows the forming device according to the first embodiment of the present disclosure and that shows a state where the laminate is installed in the forming mold.
Fig. 4 is a cross-sectional view that shows the forming device according to the first embodiment of the present disclosure and that shows a state after a forming operation is executed.
Fig. 5 is a partially enlarged view of a part A shown in Fig. 3 and shows a state before the forming operation is executed.
Fig. 6 is a partially enlarged view of the part A shown in Fig. 3 and shows a state during execution of the forming operation.
Fig. 7 is a partially enlarged view of a part A shown in Fig. 4 and shows a state after the forming operation is executed.
Fig. 8 is a partially enlarged view of a part B shown in Fig. 7.
Fig. 9 is a partially enlarged view of a part C shown in Fig. 7.
Fig. 10 is a partially enlarged view of the part B shown in Fig. 7 and shows a comparative example in which a first auxiliary member is not disposed.
Fig. 11 is a partially enlarged view of the part C shown in Fig. 7 and shows the comparative example in which the first auxiliary member is not disposed.
Fig. 12 is a flowchart showing a forming method according to the first embodiment of the present disclosure.
Fig. 13 is a cross-sectional view that shows a forming device according to a second embodiment of the present disclosure and that shows a state after the forming operation is executed.
Fig. 14 is a cross-sectional view that shows a forming device according to a third embodiment of the present disclosure and that shows a state after the forming operation is executed.
Fig. 15 is a cross-sectional view that shows a forming device according to a fourth embodiment of the present disclosure and that shows a state before the forming operation by a movement mechanism is executed.
Fig. 16 is a cross-sectional view that shows the forming device according to the fourth embodiment of the present disclosure and that shows a state after the forming operation by the movement mechanism is executed.

### Description of Embodiments

### [First Embodiment]

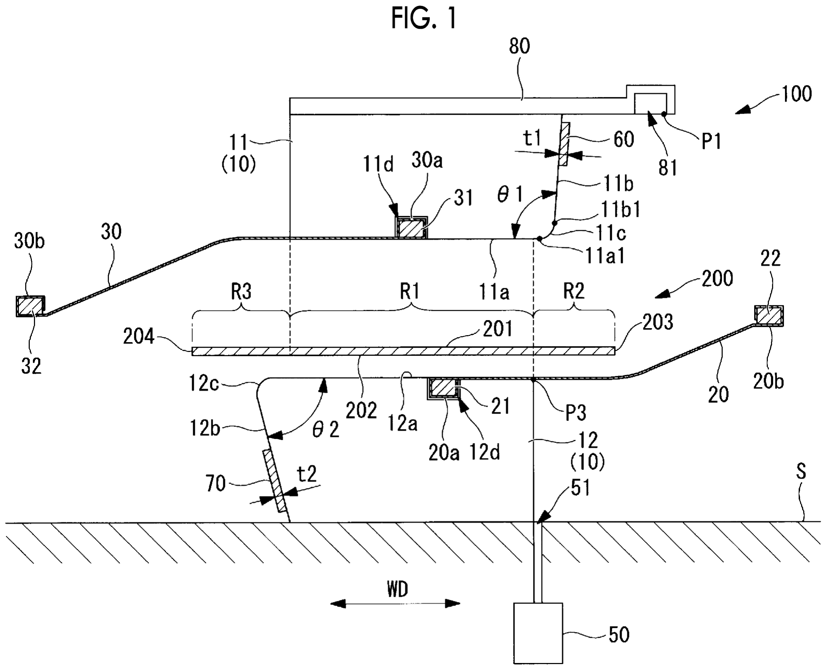

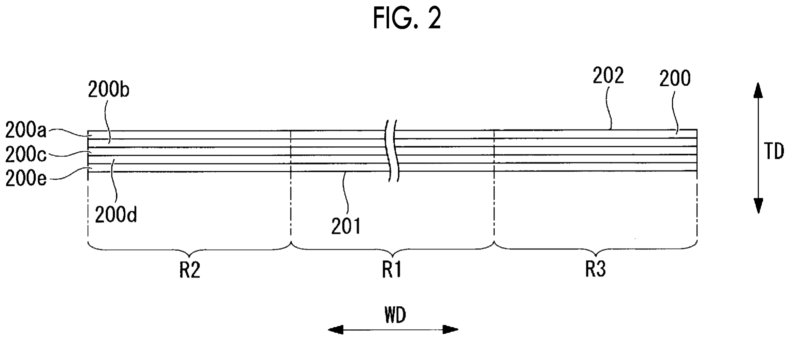

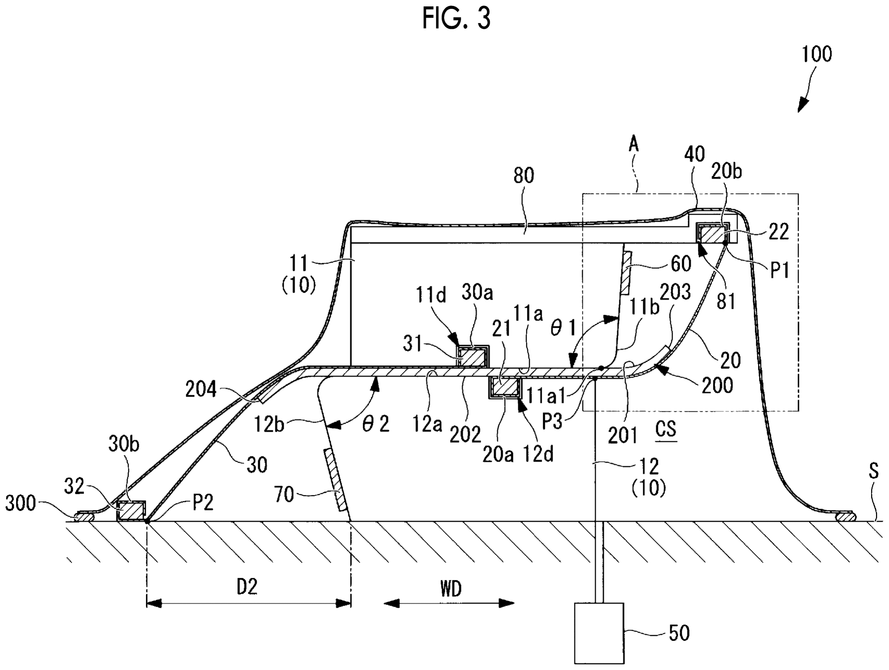

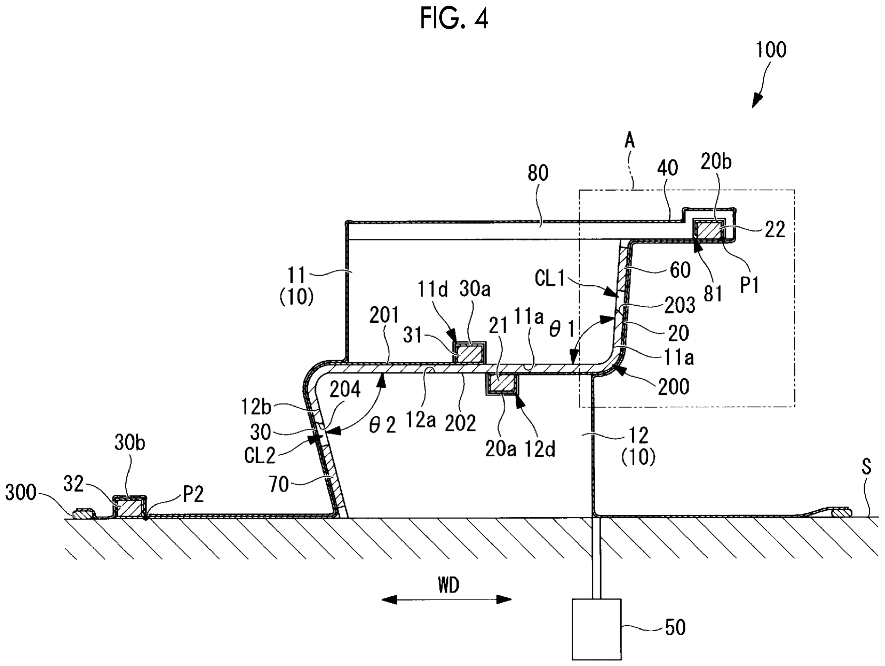

Hereinafter, a forming device 100 according to a first embodiment of the present disclosure and a forming method in which the forming device 100 is used will be described with reference to the drawings. Fig. 1 is a cross-sectional view that shows the forming device 100 according to the first embodiment of the present disclosure and that shows a state before a laminate 200 is installed in a forming mold 10. Fig. 2 is a cross-sectional view of the laminate 200 shown in Fig. 1. Fig. 3 is a cross-sectional view that shows the forming device 100 according to the first embodiment of the present disclosure and that shows a state where the laminate 200 is installed in the forming mold 10. Fig. 4 is a cross-sectional view that shows the forming device 100 according to the first embodiment of the present disclosure and that shows a state after a forming operation is executed.

The forming device 100 of the present embodiment is a device that forms the laminate 200, which is obtained by laminating a plurality of sheet-shaped materials including reinforcing fibers, along the surface shape of the forming mold 10 that forms the laminate 200. The laminate 200 is obtained by laminating a plurality of sheet-shaped composite materials. The composite materials constituting the laminate 200 are sheet-shaped intermediate forming materials in which the reinforcing fibers and matrix resins attached thereto are semi-integrated with each other.

The reinforcing fibers included in the composite materials are, for example, carbon fibers, glass fibers, aramid fibers, or the like. As the matrix resins included in the composite materials, thermosetting resins or thermoplastic resins can be used. Examples of the thermosetting matrix resins include an epoxy resin, unsaturated polyester, vinyl ester, phenol, cyanate ester, and polyimide.

Examples of the thermoplastic matrix resins include polyetheretherketone (PEEK), polyethylene terephthalate (PET), polybutylene terephthalate (PBT), nylon 6 (PA6), nylon 66 (PA66), polyphenylene sulfide (PPS), polyetherimide (PEI), and polyetherketoneketone (PEKK).

The forming mold 10 may include heating mechanisms (not shown) capable of heating the matrix resin to a temperature equal to or higher than the softening point. It is possible to form the laminate 200 including the matrix resins along the surface shape of the forming mold 10 by heating the matrix resins to the temperature equal to or higher than the softening point by means of the heating mechanisms. In addition, the heating mechanisms may be built in a first membrane 20 and a second membrane 30 which will be described later. In addition, a sheet-shaped heating mechanism may be disposed in layers between the first membrane 20 and the laminate 200 and between the second membrane 30 and the laminate 200.

As the laminate 200, a laminate that is formed in a flat shape by laminating a plurality of sheet-shaped reinforcing fibers (dry fabrics) including no matrix resin may be used. In a case where the dry fabrics are used, a resin transfer molding (RTM) method, in which the laminate 200 formed along the surface shape of the forming mold 10 is disposed on a molding tool (not shown) and a resin material is injected into the molding tool and is caused to infiltrate the reinforcing fibers so that molding is performed, is used.

In addition, in the laminate 200 formed of the dry fabrics, it is desirable that the powdery resin (powder binder) for temporarily fixing the adjacent dry fabrics to each other is sprayed on the surface of each of the plurality of layers of dry fabrics. A thermosetting resin or a thermoplastic resin can be used as the powder binder.

As shown in Fig. 1, the forming device 100 of the present embodiment includes the forming mold 10, the first membrane (first forming sheet) 20, the second membrane (second forming sheet) 30, a bladder (sealing sheet) 40, a decompression unit 50, a first auxiliary member 60, a second auxiliary member 70, and a first membrane fixing unit 80.

The forming mold 10 is a mold having a surface shape for forming the laminate 200 and is formed of a metallic material, for example. As shown in Fig. 1, the forming mold 10 has a first forming member 11 that forms a first surface 201 of the laminate 200, and a second forming member 12 that forms a second surface 202 of the laminate 200. The second forming member 12 is installed on an installation surface S.

As shown in Figs. 1 and 2, the laminate 200 has a first region R1 in a central portion in a width direction WD, a second region R2 on an end portion side in the width direction WD adjacent to the first region R1, and a third region R3 on the end portion side in the width direction WD adjacent to the first region R1. The forming mold 10 sandwiches the first region R1 of the laminate 200 between the first forming member 11 and the second forming member 12 to form the first region R1 into a shape along the width direction WD.

As shown in Fig. 2, the laminate 200 is obtained by laminating five reinforcing fiber sheets 200a, 200b, 200c, 200d, and 200e along a thickness direction TD orthogonal to the width direction WD. The number of reinforcing fiber sheets constituting the laminate 200 may be any number other than five.

As shown in Fig. 1, the first forming member 11 has a first contact surface 11a that forms the first region R1 of the laminate 200 and that extends along the width direction WD, a first forming surface 11b that forms the second region R2 of the laminate 200 and that is inclined at a first prescribed angle θ1 with respect to the width direction WD, and an arc-shaped connecting surface 11c that connects the first contact surface 11a and the first forming surface 11b. The first prescribed angle θ1 is set, for example, in a range of 45 degrees or more and 120 degrees or less. The first forming member 11 is formed to extend along a longitudinal direction (depth direction in Fig. 1) orthogonal to the width direction WD. The first forming member 11 has, for example, a shape substantially the same as the cross-sectional shape shown in Fig. 1 at each position in the longitudinal direction.

The second forming member 12 has a second contact surface 12a that forms the first region R1 of the laminate 200 and that extends along the width direction WD, a second forming surface 12b that forms the third region R3 of the laminate 200 and that is inclined at a second prescribed angle θ2 with respect to the width direction WD, and an arc-shaped connecting surface 12c that connects the second contact surface 12a and the second forming surface 12b. The second prescribed angle θ2 is set, for example, in a range of 45 degrees or more and 120 degrees or less. The second forming member 12 is formed to extend along the longitudinal direction (depth direction in Fig. 1) orthogonal to the width direction WD. The second forming member 12 has, for example, a shape substantially the same as the cross-sectional shape shown in Fig. 1 at each position in the longitudinal direction.

As shown in Fig. 1, the first contact surface 11a and the connecting surface 11c are connected to each other at a switching position 11a1, and the first forming surface 11b and the connecting surface 11c are connected to each other at a switching position 11b1. As shown in Fig. 3, in a state where the first region R1 of the laminate 200 is sandwiched between the first forming member 11 and the second forming member 12, the switching position 11a1 between the first contact surface 11a and the connecting surface 11c is disposed closer to a distal end portion 203 side of the second region R2 of the laminate 200 in the width direction WD than a position P3 of the end portion of the second contact surface 12a on a switching position 11a1 side.

At the position P3 of the end portion of the second contact surface 12a on the switching position 11a1 side, the connecting surface 11c is not disposed at a position facing the position P3 with the laminate 200 interposed therebetween. Therefore, it is possible to prevent the pressurizing force applied to the laminate 200 by the first membrane 20 from being locally reduced by the recessed portion being formed by the connecting surfaces 11c being disposed at the position facing the position P3 with the laminate 200 interposed therebetween and a forming defect from occurring due to the local reduction of the pressurizing force.

The first membrane 20 is a sheet for forming the second region R2 of the laminate 200. The first membrane 20 is formed of, for example, a rubber material having elasticity that can be extended along the width direction WD. One end 20a of the first membrane 20 is wound around a fixing rod 21, and the other end 20b of the first membrane 20 is wound around a fixing rod 22.

As shown in Fig. 3, the one end 20a of the first membrane 20 is fixed to a fixing unit 12d provided on the second contact surface 12a of the second forming member 12 at a position facing the first region R1 of the laminate 200. The other end 20b of the first membrane 20 is fixed to a first prescribed position P1 of a fixing unit 81 of the first membrane fixing unit 80 fixed to the first forming member 11. The first prescribed position P1 is a position that is relatively fixed to the first forming member 11. The other end 20b of the first membrane 20 may be directly fixed to the first forming member 11. The one end 20a of the first membrane 20 is fixed to the second forming member 12 at a position facing a region between both end portions of the first region R1 of the laminate 200 in the width direction.

The second membrane 30 is a sheet for forming the third region R3 of the laminate 200. The second membrane 30 is formed of, for example, a rubber material having elasticity that can be extended along the width direction WD. One end 30a of the second membrane 30 is wound around a fixing rod 31, and the other end 30b of the second membrane 30 is wound around a fixing rod 32.

As shown in Fig. 3, the one end 30a of the second membrane 30 is fixed to a fixing unit 11d provided on the first contact surface 11a of the first forming member 11 at the position facing the first region R1 of the laminate 200. The other end 30b of the second membrane 30 is fixed to a second prescribed position P2 on the installation surface S. The second prescribed position P2 is a position that is relatively fixed to the second forming member 12. The other end 30b of the second membrane 30 may be directly fixed to the second forming member 12.

The bladder 40 is a sheet that covers the forming mold 10 to which the first membrane 20 and the second membrane 30 are attached to form a sealed space CS. The entire region of the end portion of the bladder 40 is bonded to the installation surface S by a sealant 300. The bladder 40 pressurizes the laminate 200 via the first membrane 20 and via the second membrane 30 when the sealed space CS is decompressed.

The bladder 40 is formed of, for example, a rubber material having elasticity that can be extended along the width direction WD. Since the bladder 40 covers the entire forming device 100 and the shape of the bladder 40 changes when the sealed space CS is decompressed, it is preferable that the bladder 40 has a lower hardness than the first membrane 20 and than the second membrane 30.

The decompression unit 50 suctions the air in the sealed space CS to decompress the sealed space CS to press the first membrane 20 and the second membrane 30 into the forming mold 10 via the bladder 40. The decompression unit 50 executes the forming operation of pressing the first surface 201 of the laminate 200 against the first forming surface 11b of the first forming member 11 with the first membrane 20 that is brought into contact with the second surface 202 of the laminate 200 to bend the second region R2 of the laminate 200. In addition, the decompression unit 50 executes the forming operation of pressing the second surface 202 of the laminate 200 against the second forming surface 12b of the second forming member 12 with the second membrane 30 that is brought into contact with the first surface 201 of the laminate 200 to bend the third region R3 of the laminate 200.

The laminate 200 is pressed against the forming mold 10 by the atmospheric pressure, so that the laminate 200 is formed along the surface shape of the forming mold 10 and has a reduced thickness. The decompression unit 50 is, for example, a pump. Fig. 1 shows an example in which the air in the sealed space CS is suctioned from a suction hole 51 open in the installation surface S. The position of the suction hole 51 that suctions the air from the sealed space CS can be any position.

The first auxiliary member 60 is a plate-shaped member that is disposed on the first forming surface 11b and that has a first thickness t1. The first auxiliary member 60 is made of, for example, a metallic material. As shown in Fig. 4, the first auxiliary member 60 is disposed with a first gap CL1 between the first auxiliary member 60 and a distal end portion 203 of the second region R2 in a state where the second region R2 of the laminate 200 is brought into contact with the first forming surface 11b.

The second auxiliary member 70 is a plate-shaped member that is disposed on the second forming surface 12b and that has a second thickness t2. The second auxiliary member 70 is made of, for example, a metallic material. As shown in Fig. 4, the second auxiliary member 70 is disposed with a second gap CL2 between the second auxiliary member 70 and a distal end portion 204 of the third region R3 in a state where the third region R3 of the laminate 200 is brought into contact with the second forming surface 12b.

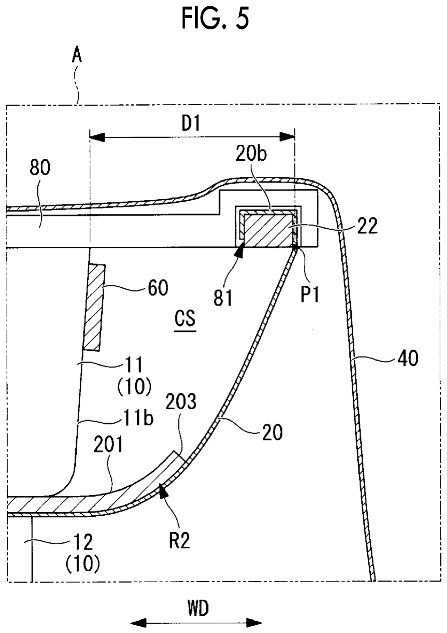

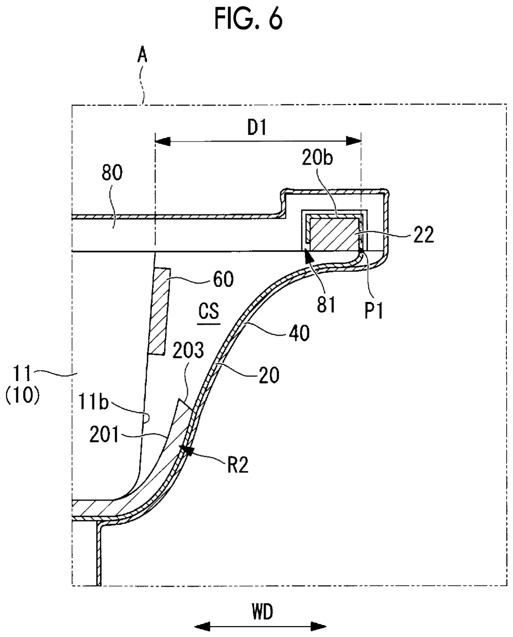

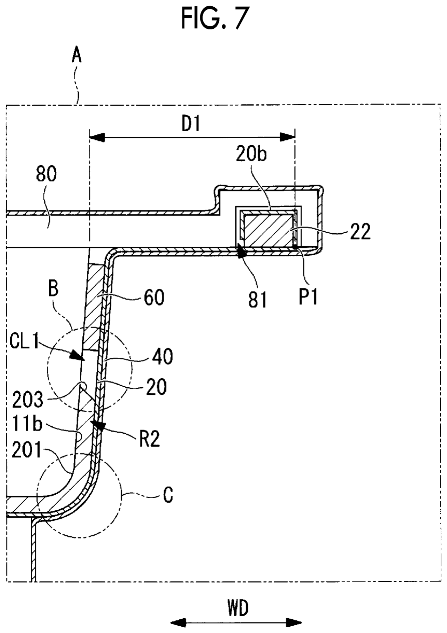

Next, an operation of the forming device 100 of the present embodiment decompressing the sealed space CS with the decompression unit 50 to form the second region R2 of the laminate 200 will be described. Fig. 5 is a partially enlarged view of a part A shown in Fig. 3 and shows a state before the forming operation is executed. Fig. 6 is a partially enlarged view of a part A shown in Fig. 3 and shows a state during execution of the forming operation. Fig. 7 is a partially enlarged view of the part A shown in Fig. 4 and shows a state after the forming operation is executed.

As shown in Fig. 5, the first prescribed position P1 where the other end 20b of the first membrane 20 is fixed to the first membrane fixing unit 80 is a position relatively fixed to the first forming member 11, and is a position separated from the first forming surface 11b of the first forming member 11 at a first prescribed distance D1 along the width direction WD. As shown in Fig. 5, before the decompression unit 50 decompresses the sealed space CS, the first surface 201 of the laminate 200 is disposed at the position separated from the first forming surface 11b.

As shown in Fig. 6, when the decompression unit 50 decompresses the sealed space CS, the pressurizing force by the bladder 40 gradually increases, and the first membrane 20 moves such that the first surface 201 of the laminate 200 gradually approaches the first forming surface 11b. When the decompression of the sealed space CS by the decompression unit 50 is completed and the state shown in Figs. 4 and 7 is achieved, the first surface 201 of the laminate 200 is in contact with the first forming surface 11b. In this way, according to the forming device 100 of the present embodiment, the first surface 201 of the laminate 200 moves in a stepwise manner from the position separated from the first forming surface 11b until the first surface 201 comes into contact with the first forming surface 11b. Therefore, it is possible to prevent the laminate 200 from being wrinkled during the forming operation.

As shown in Fig. 3, the second prescribed position P2 where the other end 30b of the second membrane 30 is fixed to the installation surface S is a position relatively fixed to the second forming member 12, and is a position separated from the second forming surface 12b of the second forming member 12 at a second prescribed distance D2 along the width direction WD. As shown in Fig. 3, before the decompression unit 50 decompresses the sealed space CS, the second surface 202 of the laminate 200 is disposed at the position separated from the second forming surface 12b.

When the decompression unit 50 decompresses the sealed space CS, the pressurizing force by the bladder 40 gradually increases, and the second membrane 30 moves such that the second surface 202 of the laminate 200 gradually approaches the second forming surface 12b. When the decompression of the sealed space CS by the decompression unit 50 is completed and the state shown in Fig. 4 is achieved, the second surface 202 of the laminate 200 is in contact with the second forming surface 12b. In this way, according to the forming device 100 of the present embodiment, the second surface 202 of the laminate 200 moves in a stepwise manner from the position separated from the second forming surface 12b until the second surface 202 comes into contact with the second forming surface 12b. Therefore, it is possible to prevent the laminate 200 from being wrinkled during the forming operation.

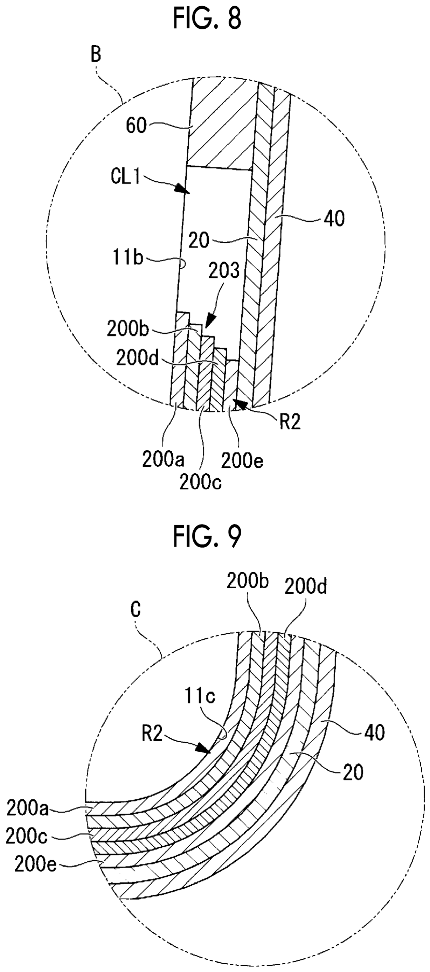

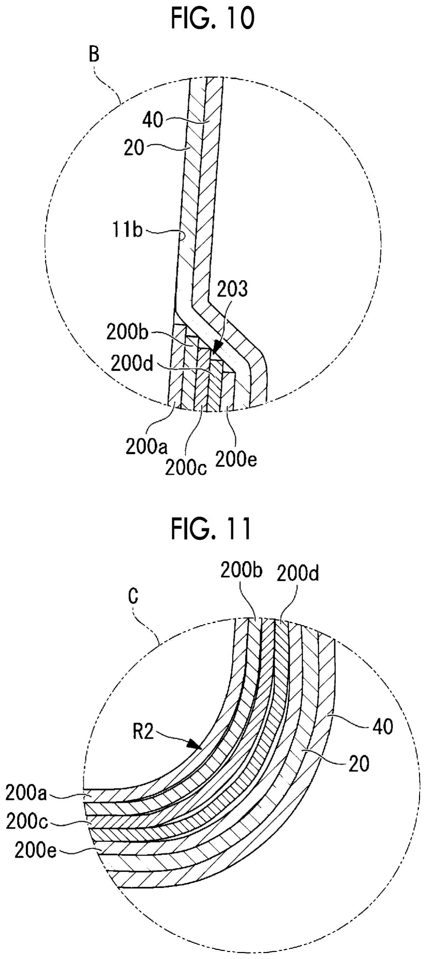

Next, the effect of disposing the first auxiliary member 60 will be described. Fig. 8 is a partially enlarged view of a part B shown in Fig. 7. Fig. 9 is a partially enlarged view of a part C shown in Fig. 7. Fig. 10 is a partially enlarged view of the part B shown in Fig. 7 and shows a comparative example in which the first auxiliary member 60 is not disposed. Fig. 11 is a partially enlarged view of the part C shown in Fig. 7 and shows the comparative example in which the first auxiliary member 60 is not disposed.

As shown in Fig. 8, according to the forming device 100 of the present embodiment, the first auxiliary member 60 is disposed with the first gap CL1 between the first auxiliary member 60 and the distal end portion 203 of the second region R2 in a state where the second region R2 of the laminate 200 is brought into contact with the first forming surface 11b. Therefore, when the forming operation is performed, the first membrane 20 is brought into direct contact with the distal end portion 203 of the second region R2 of the laminate 200, and interlayer slippage between the reinforcing fiber sheets 200a, 200b, 200c, 200d, and 200e of the laminate 200 is not hindered. Therefore, the forming device 100 can promote the interlayer slippage between the reinforcing fiber sheets 200a, 200b, 200c, 200d, and 200e when the forming operation is performed, and can faithfully bend the laminate 200 along the shape of the forming mold 10, compared to a case where the first auxiliary member 60 is not disposed.

As shown in Fig. 9, according to the forming device 100 of the present embodiment, the interlayer slippage is promoted. Therefore, in the vicinity of the connecting surface 11c where the change in curvature is large on the contact surface of the first forming member 11 with the laminate 200, a gap (void) is not generated between the reinforcing fiber sheets 200a, 200b, 200c, 200d, and 200e.

On the other hand, as shown in Fig. 10, according to the forming device of the comparative example, since the first auxiliary member 60 is not disposed, the first membrane 20 is brought into direct contact with the distal end portion 203 of the second region R2 of the laminate 200 and with the first forming surface 11b, and interlayer slippage between the reinforcing fiber sheets 200a, 200b, 200c, 200d, and 200e of the laminate 200 is hindered.

In addition, as shown in Fig. 11, according to the forming device of the comparative example, the interlayer slippage is hindered. Therefore, in the vicinity of the connecting surface 11c where the change in curvature is large on the contact surface of the first forming member 11 with the laminate 200, the gap (void) is generated between the reinforcing fiber sheets 200a, 200b, 200c, 200d, and 200e.

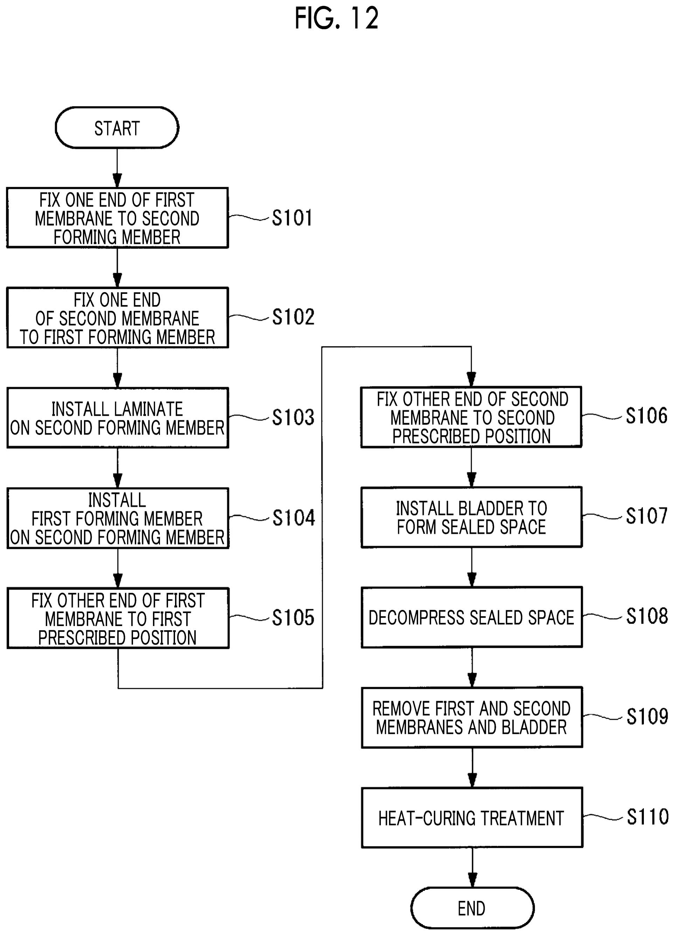

Next, a forming method executed by the forming device 100 according to the present embodiment will be described. Fig. 12 is a flowchart showing the forming method executed by the forming device 100 according to the first embodiment of the present disclosure.

In step S101, the operator fixes the one end 20a of the first membrane 20 to the fixing unit 12d of the second forming member 12.

In step S102, the operator fixes the one end 30a of the second membrane 30 to the fixing unit 11d of the first forming member 11.

In step S103, the operator installs the laminate 200 on the second forming member 12. The operator aligns the width direction WD of the laminate 200 with the horizontal direction and causes the second surface 202 of the laminate 200 to be held on the second contact surface 12a of the second forming member 12.

In step S104, the operator installs the first forming member 11 above the second forming member 12. The operator installs the first forming member 11 on the laminate 200 such that the first contact surface 11a is brought into contact with the first surface 201 of the laminate 200 installed on the second contact surface 12a of the second forming member 12.

In step S105, the operator fixes the other end 20b of the first membrane 20 to the first prescribed position P1 of the fixing unit 81 of the first membrane fixing unit 80.

In step S106, the operator fixes the other end 30b of the second membrane 30 to the second prescribed position P2 on the installation surface S.

In step S107, the operator installs the bladder 40 in the forming device 100 to form the sealed space CS. The operator applies the sealant 300 to the end portion of the bladder 40, bonds the end portion of the bladder 40 to the installation surface S with the sealant 300, and forms the sealed space CS.

In step S108, the decompression unit 50 decompresses the sealed space CS to press the first membrane 20 against the first forming member 11 and to press the second membrane 30 against the second forming member 12, via the bladder 40, so that the state shown in Fig. 4 is achieved.

In step S109, the operator removes the first membrane 20, the second membrane 30, and the bladder 40 from the forming mold 10 in accordance with the fact that the state after the forming shown in Fig. 4 has elapsed for a prescribed time. In a case of the laminate 200 obtained by laminating a plurality of sheet-shaped reinforcing fibers (dry fabrics) that do not include a matrix resin, the dry fabrics are connected to each other by melting a powdery resin (powder binder) for temporarily fixing the dry fabrics adjacent to each other by the heating mechanisms (not shown). After the powdery resin is solidified, the operator removes the first membrane 20, the second membrane 30, and the bladder 40 from the forming mold 10.

In step S110, when the matrix resin included in the composite material is a thermosetting resin, the operator carries the forming mold 10 holding the laminate 200 into a heat-curing device (not shown), and heats the laminate 200 to a prescribed curing temperature to cure the laminate 200. In a case where the matrix resin included in the composite material is a thermoplastic resin, this step is not executed. In addition, in a case where the laminate 200 is carried into the heat-curing device, the laminate 200 may be carried into the heat-curing device in a state where the laminate 200 is attached to the forming mold 10, or the laminate 200 may be removed from the forming mold 10 and carried into the heat-curing device. When step S110 is completed, the processing of this flowchart is completed.

The operation and effect of the forming device 100 of the present embodiment described above will be described.

According to the forming device 100 of the present embodiment, the first region R1 of the laminate 200 is sandwiched between the first forming member 11 and the second forming member 12 to be formed into a shape along the width direction WD. The decompression unit 50 decompresses the sealed space CS formed by the bladder 40 to execute the forming operation of pressing the first surface 201 of the laminate 200 against the first forming surface 11b with the first membrane 20 that is brought into contact with the second surface 202 of the laminate 200 to bend the laminate 200.

The first membrane 20 is disposed at a position facing the second region R2 adjacent to the first region R1, has the one end 20a fixed to the second forming member 12, and has the other end 20b fixed to the first prescribed position P1 of the first membrane fixing unit 80 attached to the first forming member 11. Therefore, when the sealed space CS is decompressed by the decompression unit 50, the first membrane 20 is pressed against the second surface 202 of the laminate 200 by the pressurizing force transmitted from the bladder 40, and the first surface 201 of the laminate 200 is pressed against the first forming surface 11b of the first forming member 11. Since the first forming surface 11b is inclined at the first prescribed angle θ1 with respect to the width direction WD, the second region R2 of the laminate 200 is bent at the first prescribed angle θ1 by the forming operation. This makes it possible to faithfully bend the laminate 200 along the shape of the forming mold 10.

In addition, according to the forming device 100 of the present embodiment, the decompression unit 50 decompresses the sealed space CS to execute the forming operation of pressing the second surface 202 of the laminate 200 against the second forming surface 12b with the second membrane 30 that is brought into contact with the first surface 201 of the laminate 200 to bend the laminate 200. The second membrane 30 is disposed at a position facing the third region R3 adjacent to the first region R1, has the one end 30a fixed to the first forming member 11, and has the other end 30b fixed to the second prescribed position P2 relatively fixed to the second forming member 12. Therefore, when the sealed space CS is decompressed by the decompression unit 50, the second membrane 30 is pressed against the first surface 201 of the laminate 200, and the second surface 202 of the laminate 200 is pressed against the second forming surface 12b of the second forming member 12. Since the second forming surface 12b is inclined at the second prescribed angle θ2 with respect to the width direction WD, the third region R3 of the laminate 200 is bent at the second prescribed angle θ2 by the forming operation.

According to the forming device 100 of the present embodiment, the first auxiliary member 60 is disposed with the first gap CL1 between the first auxiliary member 60 and the distal end portion 203 of the second region R2 in a state where the second region R2 of the laminate 200 is brought into contact with the first forming surface 11b. Therefore, when the forming operation is performed, the first membrane 20 is brought into direct contact with the distal end portion 203 of the second region R2 of the laminate 200, and interlayer slippage between the plurality of sheet materials of the laminate 200 is not hindered. Therefore, the forming device 100 can promote the interlayer slippage between the plurality of sheet materials when the forming operation is performed, and can faithfully bend the laminate 200 along the shape of the forming mold 10, compared to a case where the first auxiliary member 60 is not disposed.

According to the forming device 100 of the present embodiment, the second auxiliary member 70 is disposed with the second gap CL2 between the second auxiliary member 70 and the distal end portion 204 of the third region R3 in a state where the third region R3 of the laminate 200 is brought into contact with the second forming surface 12b. Therefore, when the forming operation is performed, the second membrane 30 is brought into direct contact with the distal end portion 204 of the third region R3 of the laminate 200, and interlayer slippage between the plurality of sheet materials of the laminate 200 is not hindered. Therefore, the forming device 100 can promote the interlayer slippage between the plurality of sheet materials when the forming operation is performed, and can faithfully bend the laminate 200 along the shape of the forming mold 10, as compared with a case where the second auxiliary member 70 is not disposed.

According to the forming device 100 of the present embodiment, the other end 20b of the first membrane 20 is fixed to the first prescribed position P1 separated from the first forming surface 11b at the first prescribed distance D1 along the width direction WD. Therefore, before the decompression unit 50 decompresses the sealed space CS, the first surface 201 of the laminate 200 is disposed at the position separated from the first forming surface 11b. When the decompression unit 50 decompresses the sealed space CS, the pressurizing force by the bladder 40 gradually increases, and the first membrane 20 moves such that the first surface 201 of the laminate 200 gradually approaches the first forming surface 11b. In this way, according to the forming device 100 of the present embodiment, the first surface 201 of the laminate 200 moves in a stepwise manner from the position separated from the first forming surface 11b until the first surface 201 comes into contact with the first forming surface 11b. Therefore, it is possible to prevent the laminate 200 from being wrinkled during the forming operation.

According to the forming device 100 of the present embodiment, the other end 30b of the second membrane 30 is fixed to the second prescribed position P2 separated from the second forming surface 12b at the second prescribed distance D2 along the width direction WD. Therefore, before the decompression unit 50 decompresses the sealed space CS, the second surface 202 of the laminate 200 is disposed at the position separated from the second forming surface 12b. When the decompression unit 50 decompresses the sealed space CS, the pressurizing force by the bladder 40 gradually increases, and the second membrane 30 moves such that the second surface 202 of the laminate 200 gradually approaches the second forming surface 12b. In this way, according to the forming device 100 of the present embodiment, the second surface 202 of the laminate 200 moves in a stepwise manner from the position separated from the second forming surface 12b until the second surface 202 comes into contact with the second forming surface 12b. Therefore, it is possible to prevent the laminate 200 from being wrinkled during the forming operation.

According to the forming device 100 of the present embodiment, the second region R2 can be reliably formed by bringing the first membrane 20 into contact with a part of the first region R1 and the second surface 202 of the second region R2 of the laminate 200. In addition, since the first membrane 20 is not brought into contact with all of the first region R1 of the laminate 200, the first membrane 20 can be easily removed as compared with a case where the first membrane 20 is brought into contact with all of the first region R1.

According to the forming device 100 of the present embodiment, the switching position 11a1 between the first contact surface 11a and the connecting surface 11c is disposed closer to a distal end portion 203 side of the second region R2 of the laminate 200 in the width direction WD than a position P3 of the end portion of the second contact surface 12a on a switching position 11a1 side. At the position P3 of the end portion of the second contact surface 12a on the switching position 11a1 side, the connecting surface 11c is not disposed at a position facing the position P3 with the laminate 200 interposed therebetween. Therefore, it is possible to prevent the pressurizing force applied to the laminate 200 by the first membrane 20 from being locally reduced by the recessed portion being formed by the connecting surfaces 11c being disposed at the position facing the position P3 with the laminate 200 interposed therebetween and a forming defect from occurring due to the local reduction of the pressurizing force.

### [Second Embodiment]

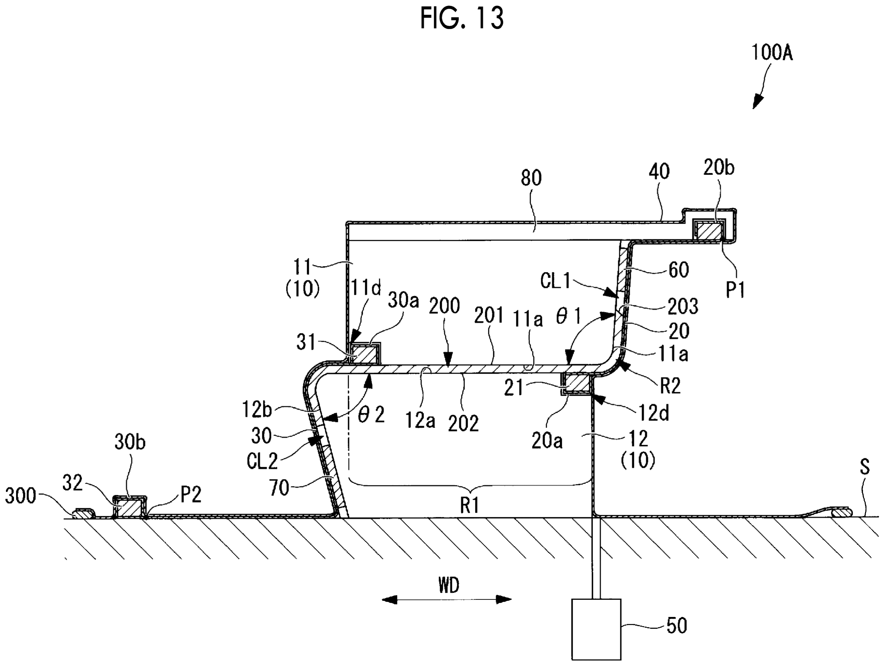

Next, a forming device 100A according to a second embodiment of the present disclosure will be described with reference to the drawings. The present embodiment is a modification example of the first embodiment and is the same as the first embodiment except for cases described below, and the description thereof will be omitted below. Fig. 13 is a cross-sectional view that shows the forming device 100A according to the second embodiment of the present disclosure and that shows a state after the forming operation is executed.

In the forming device 100 of the first embodiment, the one end 20a of the first membrane 20 is fixed to the second forming member 12 at the position facing the region between both end portions of the first region R1 of the laminate 200 in the width direction. In addition, the one end 30a of the second membrane 30 is fixed to the first forming member 11 at the position facing a region between both end portions of the first region R1 of the laminate 200 in the width direction.

In contrast, as shown in Fig. 13, in the forming device 100A of the present embodiment, the one end 20a of the first membrane 20 is fixed to the second forming member 12 at the position facing the end portion of the first region R1 of the laminate 200 on a second region R2 side. In addition, the one end 30a of the second membrane 30 is fixed to the first forming member 11 at a position facing the end portion of the first region R1 of the laminate 200 on a third region R3 side.

According to the forming device 100A of the present embodiment, the one end 20a of the first membrane 20 is fixed to the second forming member 12 at the position facing the end portion of the first region R1 of the laminate 200 on the second region R2 side. Therefore, the first membrane 20 can be easily removed. In addition, the one end 30a of the second membrane 30 is fixed to the first forming member 11 at the position facing the end portion of the first region R1 of the laminate 200 on the third region R3 side. Therefore, the second membrane 30 can be easily removed.

### [Third Embodiment]

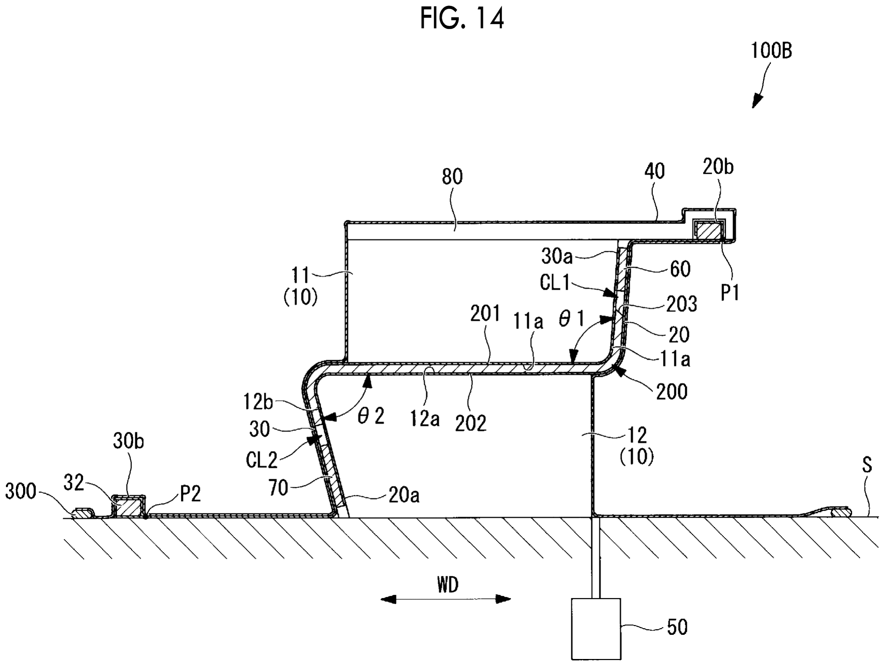

Next, a forming device 100B according to a third embodiment of the present disclosure will be described with reference to the drawings. The present embodiment is a modification example of the first embodiment and is the same as the first embodiment except for cases described below, and the description thereof will be omitted below. Fig. 14 is a cross-sectional view that shows the forming device 100B according to the third embodiment of the present disclosure and that shows a state after the forming operation is executed.

In the forming device 100 of the first embodiment, the one end 20a of the first membrane 20 is fixed to the second forming member 12 at the position facing the region between both end portions of the first region R1 of the laminate 200 in the width direction. In addition, the one end 30a of the second membrane 30 is fixed to the first forming member 11 at the position facing a region between both end portions of the first region R1 of the laminate 200 in the width direction.

In contrast, as shown in Fig. 14, in the forming device 100B of the present embodiment, the one end 20a of the first membrane 20 is fixed to the second forming surface 12b of the second forming member 12 by the second auxiliary member 70. In addition, the one end 30a of the second membrane 30 is fixed to the first forming surface 11b of the first forming member 11 by the first auxiliary member 60.

According to the forming device 100B of the present embodiment, by bringing the first membrane 20 into contact with the second surface 202 of all regions including the first region R1 and the second region R2 of the laminate 200, the forming state in each region of the laminate 200 can be made uniform. In addition, by bringing the second membrane 30 into contact with the first surface 201 of all regions including the first region R1 and the second region R2 of the laminate 200, the forming state in each region of the laminate 200 can be made uniform.

### [Fourth Embodiment]

Next, a forming device 100C according to a fourth embodiment of the present disclosure will be described with reference to the drawings. The present embodiment is a modification example of the first embodiment and is the same as the first embodiment except for cases described below, and the description thereof will be omitted below.

In the first embodiment, the atmospheric pressure acting on the bladder 40 by the decompression unit 50 decompressing the sealed space CS is used as the forming force for forming the laminate 200. In contrast, in the present embodiment, in addition to the atmospheric pressure acting on the bladder 40, the forming force generated by a movement mechanism 90 is also used as the forming force for forming the laminate 200.

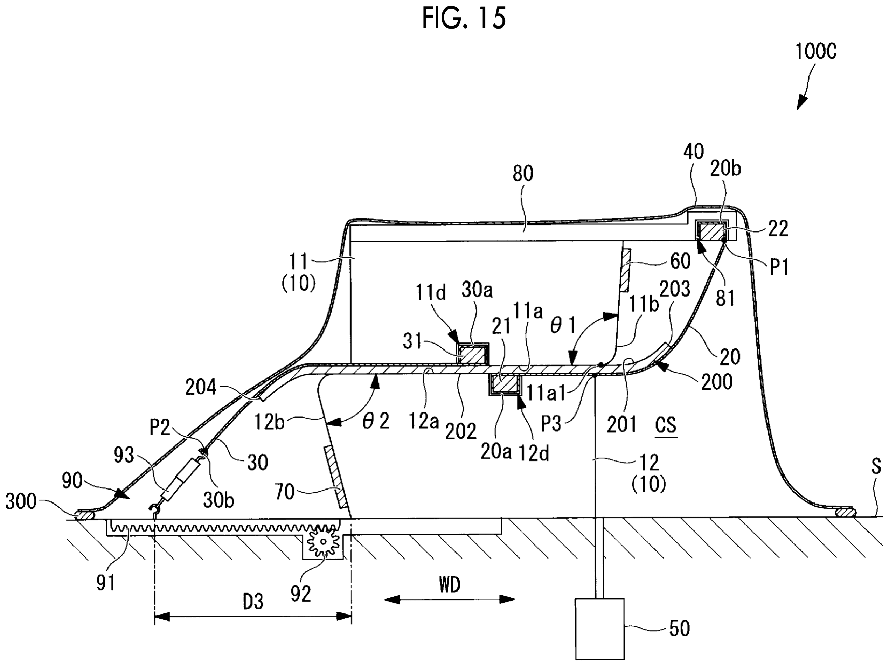

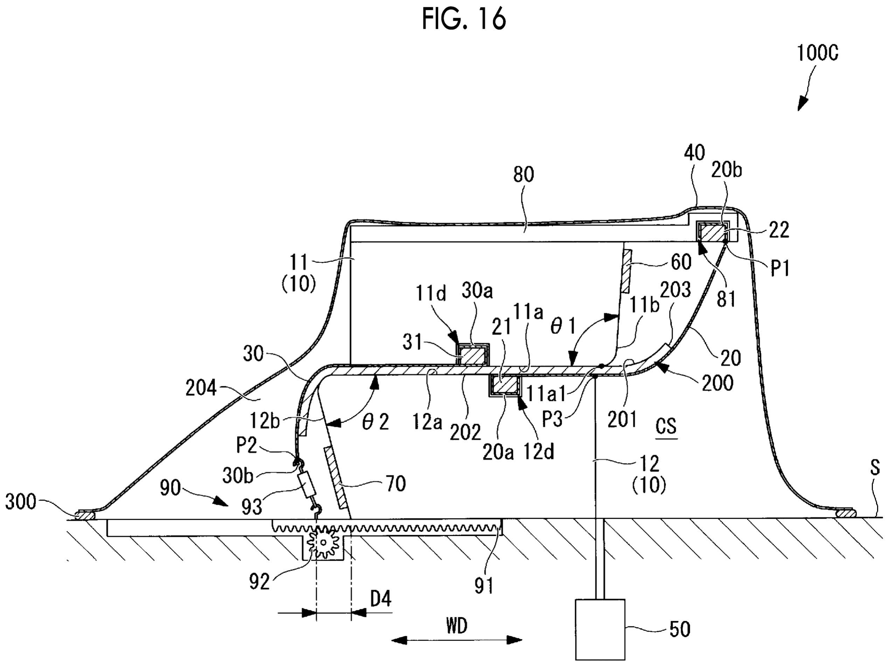

Fig. 15 is a cross-sectional view that shows the forming device 100C according to the fourth embodiment of the present disclosure and that shows a state before the forming operation by the movement mechanism 90 is executed. Fig. 16 is a cross-sectional view that shows the forming device 100C according to the fourth embodiment of the present disclosure and that shows a state after the forming operation by the movement mechanism 90 is executed.

As shown in Fig. 15, the forming device 100C of the present embodiment includes the movement mechanism 90 that moves the second prescribed position P2 where the other end 30b of the second membrane 30 is fixed in a direction approaching the second forming surface 12b. The movement mechanism 90 has a rack gear 91, a pinion gear 92, and an actuator 93 (tension generating unit). The movement mechanism 90 moves the rack gear 91 to which one end of the actuator 93 is fixed along the width direction WD by rotating the pinion gear 92 by a motor (not shown). The other end of the actuator 93 is fixed to the other end 30b of the second membrane 30 at the second prescribed position P2.

As shown in Fig. 15, before the movement mechanism 90 executes the forming operation, the one end of the actuator 93 is fixed at a position separated from the second forming surface 12b at a third prescribed distance D3 along the width direction WD. Meanwhile, as shown in Fig. 16, after the movement mechanism 90 executes the forming operation, the one end of the actuator 93 is fixed at a position separated from the second forming surface 12b at a fourth prescribed distance D4 along the width direction WD. The fourth prescribed distance D4 is a distance shorter than the third prescribed distance D3.

The actuator 93 is a device that is fixed to each of the rack gear 91 and the other end 30b of the second membrane 30 and that adjusts the tension acting on the other end 30b of the second membrane 30. The actuator 93 increases the tension acting on the other end 30b of the second membrane 30 as the second prescribed position P2 approaches the second forming surface 12b. The actuator 93 has, for example, a load cell, and adjusts the tension detected by the load cell to be a desired tension.

The movement mechanism 90 is preferably provided at a plurality of positions in the longitudinal direction (depth direction in Figs. 15 and 16) orthogonal to the width direction WD. In addition, in order to form each position of the laminate 200 in the longitudinal direction by an appropriate forming force, it is preferable that the tension generated by a plurality of the actuators 93 included in the movement mechanism 90 disposed at each position in the longitudinal direction can be set respectively. For example, the tension generated by the plurality of the actuators 93 may be the same or different in a state where the distance from the second prescribed position P2 to the second forming surface 12b is the same.

In the forming device 100C of the present embodiment shown in Fig. 15, the other end 20b of the first membrane 20 is fixed to the first membrane fixing unit 80 without moving the first prescribed position P1 to which the other end 20b is fixed. However, other aspects may be adopted. For example, the forming device 100C may include the movement mechanism (not shown) that moves the first prescribed position P1 where the other end 20b of the first membrane 20 is fixed in a direction approaching the first forming surface 11b. It is preferable that the movement mechanism that moves the first prescribed position P1 is the same as the movement mechanism 90 that moves the second prescribed position P2. In addition, it is preferable that the movement mechanism that moves the first prescribed position P1 has an actuator (tension generating unit) that increases the tension acting on the other end 20b of the first membrane 20 as the first prescribed position P1 approaches the first forming surface 11b.

In addition, in the forming device 100C of the present embodiment, the forming force is applied to the laminate 200 by the movement mechanism 90 to form the laminate 200, and then, similarly to the first embodiment, the decompression unit 50 decompresses the sealed space CS to apply further forming force to the laminate 200 by using the atmospheric pressure acting on the bladder 40. However, other aspects may be adopted. For example, in a case where the movement mechanism 90 can generate a forming force sufficient to form the laminate 200 into a desired shape along the surface shape of the forming mold 10, the operation of forming the sealed space CS by installing the bladder 40 in the forming device 100 or of decompressing the sealed space CS by the decompression unit 50 may be omitted.

In this case, the movement mechanism 90 brings the second prescribed position P2 closer to the second forming surface 12b to execute the forming operation of pressing the second surface 202 of the laminate 200 against the second forming surface 12b with the second membrane 30 that is brought into contact with the first surface 201 of the laminate 200 to bend the laminate 200. Similarly, the movement mechanism (not shown) brings the first prescribed position P1 closer to the first forming surface 11b to execute the forming operation of pressing the first surface 201 of the laminate 200 against the first forming surface 11b with the first membrane 20 that is brought into contact with the second surface 202 of the laminate 200 to bend the laminate 200.

The forming device and the forming method described in the embodiment described above are understood as follows, for example.

A forming device according to a first aspect of the present disclosure is a forming device (100) that forms a laminate (200) obtained by laminating a plurality of sheet materials including reinforcing fibers, the forming device including: a forming mold (10) that has a first forming member (11) for forming a first surface (201) of the laminate and a second forming member (12) for forming a second surface (202) of the laminate and that sandwiches a first region of the laminate between the first forming member and the second forming member to form the first region into a shape along a prescribed direction (WD); a first forming sheet (20) that is disposed at a position facing a second region (R2) adjacent to the first region, that has one end fixed to the second forming member, and that has the other end fixed to a first prescribed position (P1); a sealing sheet (40) that covers the forming mold to which the first forming sheet is attached to form a sealed space (CS); and a decompression unit (50) that decompresses the sealed space to press the first forming sheet into the forming mold via the sealing sheet, in which the first forming member has a first contact surface (11a) that is brought into contact with the first region of the laminate and that extends along the prescribed direction, and a first forming surface (11b) that is inclined at a first prescribed angle (θ1) with respect to the prescribed direction, and the decompression unit decompresses the sealed space to execute a forming operation of pressing the first surface of the laminate against the first forming surface with the first forming sheet brought into contact with the second surface of the laminate to bend the laminate.

According to the forming device according to the first aspect of the present disclosure, the first region of the laminate obtained by laminating the plurality of sheet materials including the reinforcing fibers is sandwiched between the first forming member and the second forming member to be formed into a shape along the prescribed direction. The decompression unit decompresses the sealed space formed by the sealing sheet to execute the forming operation of pressing the first surface of the laminate against the first forming surface with the first forming sheet that is brought into contact with the second surface of the laminate to bend the laminate.

The first forming sheet is disposed at a position facing the second region adjacent to the first region, has the one end fixed to the second forming member, and has the other end fixed to the first prescribed position. Therefore, when the sealed space is decompressed by the decompression unit, the first forming sheet is pressed against the second surface of the laminate by the pressurizing force transmitted from the sealing sheet, and the first surface of the laminate is pressed against the first forming surface of the first forming member. Since the first forming surface is inclined at the first prescribed angle with respect to the prescribed direction, the second region of the laminate is bent at the first prescribed angle by the forming operation. Accordingly, it is possible to provide a forming device with which it is possible to faithfully bend a laminate along a shape of a forming mold.

In the first aspect, the forming device according to a second aspect of the present disclosure further includes the following configuration. That is, a second forming sheet (30) that is disposed at a position facing a third region adjacent to the first region, that has one end fixed to the first forming member, and that has the other end fixed to a second prescribed position is provided, the second forming member has a second contact surface (12a) that is brought into contact with the first region of the laminate and that extends along the prescribed direction, and a second forming surface (12b) that is inclined at a second prescribed angle (θ2) with respect to the prescribed direction, and the decompression unit decompresses the sealed space to execute a forming operation of pressing the second surface of the laminate against the second forming surface with the second forming sheet brought into contact with the first surface of the laminate to bend the laminate.

According to the forming device according to the second aspect of the present disclosure, the decompression unit decompresses the sealed space to execute the forming operation of pressing the second surface of the laminate against the second forming surface with the second forming sheet that is brought into contact with the first surface of the laminate to bend the laminate. The second forming sheet is disposed at the position facing the third region adjacent to the first region, has the one end fixed to the first forming member, and has the other end fixed to the second prescribed position. Therefore, when the sealed space is decompressed by the decompression unit, the second forming sheet is pressed against the first surface of the laminate, and the second surface of the laminate is pressed against the second forming surface of the second forming member. Since the second forming surface is inclined at the second prescribed angle with respect to the prescribed direction, the third region of the laminate is bent at the second prescribed angle by the forming operation.

In the first aspect or the second aspect, the forming device according to a third aspect of the present disclosure further includes the following configuration. That is, a plate-shaped first auxiliary member (60) that is disposed on the first forming surface and that has a first thickness (t1) is provided, and the first auxiliary member is disposed with a first gap (CL1) between the first auxiliary member and a distal end portion (203) of the second region in a state where the second region of the laminate is brought into contact with the first forming surface.

According to the forming device according to the third aspect of the present disclosure, the first auxiliary member is disposed with the first gap between the first auxiliary member and the distal end portion of the second region in a state where the second region of the laminate is brought into contact with the first forming surface. Therefore, when the forming operation is performed, the first forming sheet is brought into direct contact with the distal end portion of the second region of the laminate, and interlayer slippage between the plurality of sheet materials of the laminate is not hindered. Therefore, the forming device can promote the interlayer slippage between the plurality of sheet materials when the forming operation is performed, and can faithfully bend the laminate along the shape of the forming mold, as compared with a case where the first auxiliary member is not disposed.

In the second aspect, the forming device according to a fourth aspect of the present disclosure further includes the following configuration. That is, a plate-shaped second auxiliary member (70) that is disposed on the second forming surface and that has a second thickness (t2) is provided, and the second auxiliary member is disposed with a second gap (CL2) between the second auxiliary member and a distal end portion (204) of the third region in a state where the third region of the laminate is brought into contact with the second forming surface.

According to the forming device according to the fourth aspect of the present disclosure, the second auxiliary member is disposed with the second gap between the second auxiliary member and the distal end portion of the third region in a state where the third region of the laminate is brought into contact with the second forming surface. Therefore, when the forming operation is performed, the second forming sheet is brought into direct contact with the distal end portion of the third region of the laminate, and interlayer slippage between the plurality of sheet materials of the laminate is not hindered. Therefore, the forming device can promote the interlayer slippage between the plurality of sheet materials when the forming operation is performed, and can faithfully bend the laminate along the shape of the forming mold, as compared with a case where the second auxiliary member is not disposed.

In the first aspect or the second aspect, the forming device according to a fifth aspect of the present disclosure further includes the following configuration. That is, the first prescribed position is a position separated from the first forming surface at a first prescribed distance (D1) along the prescribed direction.

According to the forming device according to the fifth aspect of the present disclosure, the other end of the first forming sheet is fixed to the first prescribed position separated from the first forming surface at the first prescribed distance along the prescribed direction. Therefore, before the decompression unit decompresses the sealed space, the first surface of the laminate is disposed at the position separated from the first forming surface. When the decompression unit decompresses the sealed space, the pressurizing force by the sealing sheet gradually increases, and the first forming sheet moves such that the first surface of the laminate gradually approaches the first forming surface. In this way, according to the forming device according to the fifth aspect of the present disclosure, the first surface of the laminate moves in a stepwise manner from the position separated from the first forming surface until the first surface comes into contact with the first forming surface. Therefore, it is possible to prevent the laminate from being wrinkled during the forming operation.

In the second aspect, the forming device according to a sixth aspect of the present disclosure further includes the following configuration. That is, the second prescribed position is a position separated from the second forming surface at a second prescribed distance along the prescribed direction.

According to the forming device according to the sixth aspect of the present disclosure, the other end of the second forming sheet is fixed to the second prescribed position separated from the second forming surface at the second prescribed distance along the prescribed direction. Therefore, before the decompression unit decompresses the sealed space, the second surface of the laminate is disposed at the position separated from the second forming surface. When the decompression unit decompresses the sealed space, the pressurizing force by the sealing sheet gradually increases, and the second forming sheet moves such that the second surface of the laminate gradually approaches the second forming surface. In this way, according to the forming device according to the sixth aspect of the present disclosure, the second surface of the laminate moves in a stepwise manner from the position separated from the second forming surface until the second surface comes into contact with the second forming surface. Therefore, it is possible to prevent the laminate from being wrinkled during the forming operation.

In the first aspect or the second aspect, the forming device according to a seventh aspect of the present disclosure further includes the following configuration. That is, the one end of the first forming sheet is fixed to the second forming member at a position facing a region between both end portions of the first region of the laminate in the prescribed direction.

According to the forming device according to the seventh aspect of the present disclosure, the second region can be reliably formed by bringing the first forming sheet into contact with a part of the first region and the second surface of the second region of the laminate. In addition, since the first forming sheet is not brought into contact with all of the first region of the laminate, the first forming sheet can be easily removed as compared with a case where the first forming sheet is brought into contact with all of the first region.

In the first aspect or the second aspect, the forming device according to an eighth aspect of the present disclosure further includes the following configuration. That is, the one end of the first forming sheet is fixed to the second forming member at a position facing an end portion of the first region of the laminate on a second region side.

According to the forming device according to the eighth aspect of the present disclosure, the one end of the first forming sheet is fixed to the second forming member at the position facing the end portion of the first region of the laminate on the second region side. Therefore, the first forming sheet can be easily removed.

In the second aspect, the forming device according to a ninth aspect of the present disclosure further includes the following configuration. That is, the one end of the first forming sheet is fixed to the second forming surface of the second forming member.

According to the forming device according to the ninth aspect of the present disclosure, by bringing the first forming sheet into contact with the second surface of all regions including the first region and the second region of the laminate, the forming state in each region of the laminate can be made uniform.

In the second aspect, the forming device according to a tenth aspect of the present disclosure further includes the following configuration. That is, the first forming member has an arc-shaped connecting surface (11c) connecting the first contact surface and the first forming surface, and, in a state where the first region of the laminate is sandwiched between the first forming member and the second forming member, a switching position (11a1) between the first contact surface and the connecting surface is disposed closer to a distal end portion (203) side of the second region of the laminate in the prescribed direction than a position (P3) of an end portion of the second contact surface on a switching position side.

According to the forming device according to the tenth aspect of the present disclosure, the switching position between the first contact surface and the connecting surface is disposed closer to a distal end portion side of the second region of the laminate in the prescribed direction than a position of the end portion of the second contact surface on a switching position side. At the end portion of the second contact surface on the switching position side, the connecting surface is not disposed at a position facing the end portion with the laminate interposed therebetween. Therefore, it is possible to prevent the pressurizing force applied to the laminate by the first forming sheet from being locally reduced by the recessed portion being formed by the connecting surfaces being disposed at the position facing the end portion with the laminate interposed therebetween and a forming defect from occurring due to the local reduction of the pressurizing force.

In the first aspect or the second aspect, the forming device according to an eleventh aspect of the present disclosure further includes the following configuration. That is, a movement mechanism that moves the first prescribed position to which the other end of the first forming sheet is fixed in a direction approaching the first forming surface is provided.

According to the forming device according to eleventh aspect of the present disclosure, a forming force for partially bending the laminate can be applied before the decompression unit decompresses the sealed space by moving the first prescribed position where the other end of the first forming sheet is fixed in the direction approaching the first forming surface by the movement mechanism.

In the eleventh aspect, the forming device according to a twelfth aspect of the present disclosure further includes the following configuration. That is, the movement mechanism has a tension generating unit that increases a tension acting on the other end of the first forming sheet as the first prescribed position approaches the first forming surface.

According to the forming device according to the twelfth aspect of the present disclosure, the tension acting on the other end of the first forming sheet is increased as the first prescribed position approaches the first forming surface. In this manner, the laminate can be appropriately formed along the forming mold.

In a forming method according to a thirteenth aspect of the present disclosure, the forming device (100) includes a forming mold that has a first forming member for forming a first surface of the laminate and a second forming member for forming a second surface of the laminate and that sandwiches a first region of the laminate between the first forming member and the second forming member to form the first region into a shape along a prescribed direction, a first forming sheet that is disposed at a position facing a second region adjacent to the first region, that has one end fixed to the second forming member, and that has the other end fixed to a first prescribed position, and a sealing sheet that covers the forming mold to which the first forming sheet is attached to form a sealed space, and the first forming member has a first contact surface that is brought into contact with the first region of the laminate and that extends along the prescribed direction, and a first forming surface that is inclined at a first prescribed angle with respect to the prescribed direction, the method including: a forming step (S108) of decompressing the sealed space to press the first forming sheet into the forming mold via the sealing sheet, in which in the forming step, the sealed space is decompressed to execute a forming operation of pressing the first surface of the laminate against the first forming surface with the first forming sheet brought into contact with the second surface of the laminate to bend the laminate.

According to the forming method according to the thirteenth aspect of the present disclosure, the first region of the laminate obtained by laminating the plurality of sheet materials including the reinforcing fibers is sandwiched between the first forming member and the second forming member to be formed into a shape along the prescribed direction. In the forming step, the sealed space formed by the sealing sheet is decompressed to execute the forming operation of pressing the first surface of the laminate against the first forming surface with the first forming sheet that is brought into contact with the second surface of the laminate to bend the laminate.

The first forming sheet is disposed at a position facing the second region adjacent to the first region, has the one end fixed to the second forming member, and has the other end fixed to the first prescribed position. Therefore, when the sealed space is decompressed by the forming step, the first forming sheet is pressed against the second surface of the laminate by the pressurizing force transmitted from the sealing sheet, and the first surface of the laminate is pressed against the first forming surface of the first forming member. Since the first forming surface is inclined at the first prescribed angle with respect to the prescribed direction, the second region of the laminate is bent at the first prescribed angle by the forming operation. Accordingly, it is possible to provide a forming method with which it is possible to faithfully bend a laminate along a shape of a forming mold.

In the thirteenth aspect, the forming method according to a fourteenth aspect of the present disclosure further includes the following configuration. That is, the forming device includes a second forming sheet that is disposed at a position facing a third region adjacent to the first region, that has one end fixed to the first forming member, and that has the other end fixed to a second prescribed position, the second forming member has a second contact surface that is brought into contact with the first region of the laminate and that extends along the prescribed direction, and a second forming surface that is inclined at a second prescribed angle with respect to the prescribed direction, and in the forming step, the sealed space is decompressed to execute a forming operation of pressing the second surface of the laminate against the second forming surface with the second forming sheet brought into contact with the first surface of the laminate to bend the laminate.

According to the forming method according to the fourteenth aspect of the present disclosure, in the forming step, the sealed space is decompressed to execute the forming operation of pressing the second surface of the laminate against the second forming surface with the second forming sheet that is brought into contact with the first surface of the laminate to bend the laminate.

The second forming sheet is disposed at the position facing the third region adjacent to the first region, has the one end fixed to the first forming member, and has the other end fixed to the second prescribed position. Therefore, when the sealed space is decompressed by the forming step, the second forming sheet is pressed against the first surface of the laminate, and the second surface of the laminate is pressed against the second forming surface of the second forming member. Since the second forming surface is inclined at the second prescribed angle with respect to the prescribed direction, the third region of the laminate is bent at the second prescribed angle by the forming operation.

In the thirteenth aspect or the fourteenth aspect, the forming method according to a fifteenth aspect of the present disclosure further includes the following configuration. That is, the forming device includes a plate-shaped first auxiliary member that is disposed on the first forming surface and that has a first thickness, and the first auxiliary member is disposed with a first gap between the first auxiliary member and a distal end portion of the second region in a state where the second region of the laminate is brought into contact with the first forming surface.

According to the forming method according to the fifteenth aspect of the present disclosure, the first auxiliary member is disposed with the first gap between the first auxiliary member and the distal end portion of the second region in a state where the second region of the laminate is brought into contact with the first forming surface. Therefore, when the forming operation is performed, the first forming sheet is brought into direct contact with the distal end portion of the second region of the laminate, and interlayer slippage between the plurality of sheet materials of the laminate is not hindered. Therefore, the forming method can promote the interlayer slippage between the plurality of sheet materials when the forming operation is performed, and can faithfully bend the laminate along the shape of the forming mold, as compared with a case where the first auxiliary member is not disposed.

In the fourteenth aspect, the forming method according to a sixteenth aspect of the present disclosure further includes the following configuration. That is, the forming device includes a plate-shaped second auxiliary member that is disposed on the second forming surface and that has a second thickness, and the second auxiliary member is disposed with a second gap between the second auxiliary member and a distal end portion of the third region in a state where the third region of the laminate is brought into contact with the second forming surface.

According to the forming method according to the sixteenth aspect of the present disclosure, the second auxiliary member is disposed with the second gap between the second auxiliary member and the distal end portion of the third region in a state where the third region of the laminate is brought into contact with the second forming surface. Therefore, when the forming operation is performed, the second forming sheet is brought into direct contact with the distal end portion of the third region of the laminate, and interlayer slippage between the plurality of sheet materials of the laminate is not hindered. Therefore, the forming method can promote the interlayer slippage between the plurality of sheet materials when the forming operation is performed, and can faithfully bend the laminate along the shape of the forming mold, as compared with a case where the second auxiliary member is not disposed.

In the thirteenth aspect or the fourteenth aspect, the forming method according to a seventeenth aspect of the present disclosure further includes the following configuration. That is, the first prescribed position is a position separated from the first forming surface at a first prescribed distance (D1) along the prescribed direction.

According to the forming method according to the seventeenth aspect of the present disclosure, the other end of the first forming sheet is fixed to the first prescribed position separated from the first forming surface at the first prescribed distance along the prescribed direction. Therefore, before the decompression unit decompresses the sealed space, the first surface of the laminate is disposed at the position separated from the first forming surface. When the sealed space is decompressed in the forming step, the pressurizing force by the sealing sheet gradually increases, and the first forming sheet moves such that the first surface of the laminate gradually approaches the first forming surface. In this way, according to the forming method according to the seventeenth aspect of the present disclosure, the first surface of the laminate moves in a stepwise manner from the position separated from the first forming surface until the first surface comes into contact with the first forming surface. Therefore, it is possible to prevent the laminate from being wrinkled during the forming operation.

In the fourteenth aspect, the forming method according to an eighteenth aspect of the present disclosure further includes the following configuration. That is, the second prescribed position is a position separated from the second forming surface at a second prescribed distance along the prescribed direction.

According to the forming method according to the eighteenth aspect of the present disclosure, the other end of the second forming sheet is fixed to the second prescribed position separated from the second forming surface at the second prescribed distance along the prescribed direction. Therefore, before the decompression unit decompresses the sealed space, the second surface of the laminate is disposed at the position separated from the second forming surface. When the sealed space is decompressed in the forming step, the pressurizing force by the sealing sheet gradually increases, and the second forming sheet moves such that the second surface of the laminate gradually approaches the second forming surface. In this way, according to the forming method according to the eighteenth aspect of the present disclosure, the second surface of the laminate moves in a stepwise manner from the position separated from the second forming surface until the second surface comes into contact with the second forming surface. Therefore, it is possible to prevent the laminate from being wrinkled during the forming operation.

In the thirteenth aspect or the fourteenth aspect, the forming method according to a nineteenth aspect of the present disclosure further includes the following configuration. That is, the one end of the first forming sheet is fixed to the second forming member at a position facing a region between both end portions of the first region of the laminate in the prescribed direction.

According to the forming method according to the nineteenth aspect of the present disclosure, the second region can be reliably formed by bringing the first forming sheet into contact with a part of the first region and the second surface of the second region of the laminate. In addition, since the first forming sheet is not brought into contact with all of the first region of the laminate, the first forming sheet can be easily removed as compared with a case where the first forming sheet is brought into contact with all of the first region.

In the thirteenth aspect or the fourteenth aspect, the forming method according to a twentieth aspect of the present disclosure further includes the following configuration. That is, the one end of the first forming sheet is fixed to the second forming member at a position facing an end portion of the first region of the laminate on a second region side.

According to the forming method according to the twentieth aspect of the present disclosure, the one end of the first forming sheet is fixed to the second forming member at the position facing the end portion of the first region of the laminate on the second region side. Therefore, the first forming sheet can be easily removed.

In the fourteenth aspect, the forming method according to a twenty-first aspect of the present disclosure further includes the following configuration. That is, the one end of the first forming sheet is fixed to the second forming surface of the second forming member.

According to the forming method according to the twenty-first aspect of the present disclosure, by bringing the first forming sheet into contact with the second surface of all regions including the first region and the second region of the laminate, the forming state in each region of the laminate can be made uniform.

In the fourteenth aspect, the forming method according to a twenty-second aspect of the present disclosure further includes the following configuration. That is, the first forming member has an arc-shaped connecting surface (11c) connecting the first contact surface and the first forming surface, and, in a state where the first region of the laminate is sandwiched between the first forming member and the second forming member, a switching position (11al) between the first contact surface and the connecting surface is disposed closer to a distal end portion (203) side of the second region of the laminate in the prescribed direction than a position (P3) of an end portion of the second contact surface on a switching position side.

According to the forming method according to the twenty-second aspect of the present disclosure, the switching position between the first contact surface and the connecting surface is disposed closer to a distal end portion side of the second region of the laminate in the prescribed direction than a position of the end portion of the second contact surface on a switching position side. At the end portion of the second contact surface on the switching position side, the connecting surface is not disposed at a position facing the end portion with the laminate interposed therebetween. Therefore, it is possible to prevent the pressurizing force applied to the laminate by the first forming sheet from being locally reduced by the recessed portion being formed by the connecting surfaces being disposed at the position facing the end portion with the laminate interposed therebetween and a forming defect from occurring due to the local reduction of the pressurizing force.

In the thirteenth aspect or the fourteenth aspect, the forming method according to a twenty-third aspect of the present disclosure further includes the following configuration. That is, a moving step of moving the first prescribed position to which the other end of the first forming sheet is fixed in a direction approaching the first forming surface is provided.

According to the forming method according to twenty-third aspect of the present disclosure, a forming force for partially bending the laminate can be applied before the sealed space is decompressed in the forming step by moving the first prescribed position where the other end of the first forming sheet is fixed in the direction approaching the first forming surface by the moving step.

In the twenty-third aspect, the forming method according to a twenty-fourth aspect of the present disclosure further includes the following configuration. That is, in the moving step, a tension acting on the other end of the first forming sheet is increased as the first prescribed position approaches the first forming surface.

According to the forming method according to the twenty-fourth aspect of the present disclosure, the tension acting on the other end of the first forming sheet is increased as the first prescribed position approaches the first forming surface. In this manner, the laminate can be appropriately formed along the forming mold.

A forming device according to a twenty-fifth aspect of the present disclosure is a forming device that forms a laminate obtained by laminating a plurality of sheet materials including reinforcing fibers, the forming device including: a forming mold that has a first forming member for forming a first surface of the laminate and a second forming member for forming a second surface of the laminate and that sandwiches a first region of the laminate between the first forming member and the second forming member to form the first region into a shape along a prescribed direction; a first forming sheet that is disposed at a position facing a second region adjacent to the first region, that has one end fixed to the second forming member, and that has the other end fixed to a first prescribed position; and a movement mechanism that moves the first prescribed position to which the other end of the first forming sheet is fixed in a direction approaching the first forming member, in which the first forming member has a first contact surface that is brought into contact with the first region of the laminate and that extends along the prescribed direction, and a first forming surface that is inclined at a first prescribed angle with respect to the prescribed direction, and the movement mechanism brings the first prescribed position closer to the first forming surface to execute a forming operation of pressing the first surface of the laminate against the first forming surface with the first forming sheet brought into contact with the second surface of the laminate to bend the laminate.

A forming method according to a twenty-sixth aspect of the present disclosure is a forming method of forming a laminate obtained by laminating a plurality of sheet materials including reinforcing fibers via a forming device, in which the forming device includes a forming mold that has a first forming member for forming a first surface of the laminate and a second forming member for forming a second surface of the laminate and that sandwiches a first region of the laminate between the first forming member and the second forming member to form the first region into a shape along a prescribed direction, and a first forming sheet that is disposed at a position facing a second region adjacent to the first region, that has one end fixed to the second forming member, and that has the other end fixed to a first prescribed position, and the first forming member has a first contact surface that is brought into contact with the first region of the laminate and that extends along the prescribed direction, and a first forming surface that is inclined at a first prescribed angle with respect to the prescribed direction, the method including: a forming step of moving the first prescribed position to which the other end of the first forming sheet is fixed in a direction approaching the first forming surface to press the first forming sheet into the forming mold, in which in the forming step, the first prescribed position is brought closer to the first forming surface to execute a forming operation of pressing the first surface of the laminate against the first forming surface with the first forming sheet brought into contact with the second surface of the laminate to bend the laminate.

### Reference Signs List

10: forming mold
11: first forming member
11a: first contact surface
11a1, 11b1: switching position
11b: first forming surface
11c, 12c: connecting surface
11d, 12d: fixing unit
12: second forming member
12a: second contact surface
12b: second forming surface
20: first membrane (first forming sheet)
20a, 30a: one end
20b, 30b: other end
21, 22: fixing rod
30: second membrane (second forming sheet)
31, 32: fixing rod
40: bladder (sealing sheet)
50: decompression unit
60: first auxiliary member
70: second auxiliary member
90: movement mechanism
91: rack gear
92: pinion gear
93: actuator (tension generating unit)
100, 100A, 100B, 100C: forming device
200: laminate
201: first surface
202: second surface
203, 204: distal end portion
300: sealant
CL1: first gap
CL2: second gap
CS: sealed space
D1: first prescribed distance
D2: second prescribed distance
P1: first prescribed position
P2: second prescribed position
R1: first region
R2: second region
R3: third region
S: installation surface
TD: thickness direction
WD: width direction (prescribed direction)

## Claims

1. A forming device that forms a laminate obtained by laminating a plurality of sheet materials including reinforcing fibers, the forming device comprising:
a forming mold that has a first forming member for forming a first surface of the laminate and a second forming member for forming a second surface of the laminate and that sandwiches a first region of the laminate between the first forming member and the second forming member to form the first region into a shape along a prescribed direction;
a first forming sheet that is disposed at a position facing a second region adjacent to the first region, that has one end fixed to the second forming member, and that has the other end fixed to a first prescribed position;
a sealing sheet that covers the forming mold to which the first forming sheet is attached to form a sealed space; and
a decompression unit that decompresses the sealed space to press the first forming sheet into the forming mold via the sealing sheet,
wherein the first forming member has a first contact surface that is brought into contact with the first region of the laminate and that extends along the prescribed direction, and a first forming surface that is inclined at a first prescribed angle with respect to the prescribed direction, and
the decompression unit decompresses the sealed space to execute a forming operation of pressing the first surface of the laminate against the first forming surface with the first forming sheet brought into contact with the second surface of the laminate to bend the laminate.

2. The forming device according to Claim 1, further comprising:
a second forming sheet that is disposed at a position facing a third region adjacent to the first region, that has one end fixed to the first forming member, and that has the other end fixed to a second prescribed position,
wherein the second forming member has a second contact surface that is brought into contact with the first region of the laminate and that extends along the prescribed direction, and a second forming surface that is inclined at a second prescribed angle with respect to the prescribed direction, and
the decompression unit decompresses the sealed space to execute a forming operation of pressing the second surface of the laminate against the second forming surface with the second forming sheet brought into contact with the first surface of the laminate to bend the laminate.

3. The forming device according to Claim 1 or 2, further comprising:
a plate-shaped first auxiliary member that is disposed on the first forming surface and that has a first thickness,
wherein the first auxiliary member is disposed with a first gap between the first auxiliary member and a distal end portion of the second region in a state where the second region of the laminate is brought into contact with the first forming surface.

4. The forming device according to Claim 2, further comprising:
a plate-shaped second auxiliary member that is disposed on the second forming surface and that has a second thickness,
wherein the second auxiliary member is disposed with a second gap between the second auxiliary member and a distal end portion of the third region in a state where the third region of the laminate is brought into contact with the second forming surface.

5. The forming device according to Claim 1 or 2,
wherein the first prescribed position is a position separated from the first forming surface at a first prescribed distance along the prescribed direction.

6. The forming device according to Claim 2,
wherein the second prescribed position is a position separated from the second forming surface at a second prescribed distance along the prescribed direction.

7. The forming device according to Claim 1 or 2,
wherein the one end of the first forming sheet is fixed to the second forming member at a position facing a region between both end portions of the first region of the laminate in the prescribed direction.

8. The forming device according to Claim 1 or 2,
wherein the one end of the first forming sheet is fixed to the second forming member at a position facing an end portion of the first region of the laminate on a second region side.

9. The forming device according to Claim 2,
wherein the one end of the first forming sheet is fixed to the second forming surface of the second forming member.

10. The forming device according to Claim 2,
wherein the first forming member has an arc-shaped connecting surface connecting the first contact surface and the first forming surface, and,
in a state where the first region of the laminate is sandwiched between the first forming member and the second forming member, a switching position between the first contact surface and the connecting surface is disposed closer to a distal end portion side of the second region of the laminate in the prescribed direction than a position of an end portion of the second contact surface on a switching position side.

11. The forming device according to Claim 1 or 2, further comprising:
a movement mechanism that moves the first prescribed position to which the other end of the first forming sheet is fixed in a direction approaching the first forming surface.

12. The forming device according to Claim 11,
wherein the movement mechanism has a tension generating unit that increases a tension acting on the other end of the first forming sheet as the first prescribed position approaches the first forming surface.

13. A forming method of forming a laminate obtained by laminating a plurality of sheet materials including reinforcing fibers via a forming device, in which the forming device includes a forming mold that has a first forming member for forming a first surface of the laminate and a second forming member for forming a second surface of the laminate and that sandwiches a first region of the laminate between the first forming member and the second forming member to form the first region into a shape along a prescribed direction, a first forming sheet that is disposed at a position facing a second region adjacent to the first region, that has one end fixed to the second forming member, and that has the other end fixed to a first prescribed position, and a sealing sheet that covers the forming mold to which the first forming sheet is attached to form a sealed space, and the first forming member has a first contact surface that is brought into contact with the first region of the laminate and that extends along the prescribed direction, and a first forming surface that is inclined at a first prescribed angle with respect to the prescribed direction, the method comprising:
a forming step of decompressing the sealed space to press the first forming sheet into the forming mold via the sealing sheet,
wherein in the forming step, the sealed space is decompressed to execute a forming operation of pressing the first surface of the laminate against the first forming surface with the first forming sheet brought into contact with the second surface of the laminate to bend the laminate.

14. The forming method according to Claim 13,
wherein the forming device further includes a second forming sheet that is disposed at a position facing a third region adjacent to the first region, that has one end fixed to the first forming member, and that has the other end fixed to a second prescribed position,
the second forming member has a second contact surface that is brought into contact with the first region of the laminate and that extends along the prescribed direction, and a second forming surface that is inclined at a second prescribed angle with respect to the prescribed direction, and
in the forming step, the sealed space is decompressed to execute a forming operation of pressing the second surface of the laminate against the second forming surface with the second forming sheet brought into contact with the first surface of the laminate to bend the laminate.

15. The forming method according to Claim 13 or 14,
wherein the forming device further includes a plate-shaped first auxiliary member that is disposed on the first forming surface and that has a first thickness, and
the first auxiliary member is disposed with a first gap between the first auxiliary member and a distal end portion of the second region in a state where the second region of the laminate is brought into contact with the first forming surface.

16. The forming method according to Claim 14,
wherein the forming device further includes a plate-shaped second auxiliary member that is disposed on the second forming surface and that has a second thickness, and
the second auxiliary member is disposed with a second gap between the second auxiliary member and a distal end portion of the third region in a state where the third region of the laminate is brought into contact with the second forming surface.

17. The forming method according to Claim 13 or 14,
wherein the first prescribed position is a position separated from the first forming surface at a first prescribed distance along the prescribed direction.

18. The forming method according to Claim 14,
wherein the second prescribed position is a position separated from the second forming surface at a second prescribed distance along the prescribed direction.

19. The forming method according to Claim 13 or 14,
wherein the one end of the first forming sheet is fixed to the second forming member at a position facing a region between both end portions of the first region of the laminate in the prescribed direction.

20. The forming method according to Claim 13 or 14,
wherein the one end of the first forming sheet is fixed to the second forming member at a position facing an end portion of the first region of the laminate on a second region side.

21. The forming method according to Claim 14,
wherein the one end of the first forming sheet is fixed to the second forming surface of the second forming member.

22. The forming method according to Claim 14,
wherein the first forming member has an arc-shaped connecting surface connecting the first contact surface and the first forming surface, and,
in a state where the first region of the laminate is sandwiched between the first forming member and the second forming member, a switching position between the first contact surface and the connecting surface is disposed closer to a distal end portion side of the second region of the laminate in the prescribed direction than a position of an end portion of the second contact surface on a switching position side.

23. The forming method according to Claim 13 or 14, further comprising:
a moving step of moving the first prescribed position to which the other end of the first forming sheet is fixed in a direction approaching the first forming surface.

24. The forming method according to Claim 23,
wherein in the moving step, a tension acting on the other end of the first forming sheet is increased as the first prescribed position approaches the first forming surface.

25. A forming device that forms a laminate obtained by laminating a plurality of sheet materials including reinforcing fibers, the forming device comprising:
a forming mold that has a first forming member for forming a first surface of the laminate and a second forming member for forming a second surface of the laminate and that sandwiches a first region of the laminate between the first forming member and the second forming member to form the first region into a shape along a prescribed direction;
a first forming sheet that is disposed at a position facing a second region adjacent to the first region, that has one end fixed to the second forming member, and that has the other end fixed to a first prescribed position; and
a movement mechanism that moves the first prescribed position to which the other end of the first forming sheet is fixed in a direction approaching the first forming member,
wherein the first forming member has a first contact surface that is brought into contact with the first region of the laminate and that extends along the prescribed direction, and a first forming surface that is inclined at a first prescribed angle with respect to the prescribed direction, and
the movement mechanism brings the first prescribed position closer to the first forming surface to execute a forming operation of pressing the first surface of the laminate against the first forming surface with the first forming sheet brought into contact with the second surface of the laminate to bend the laminate.

26. A forming method of forming a laminate obtained by laminating a plurality of sheet materials including reinforcing fibers via a forming device, in which the forming device includes a forming mold that has a first forming member for forming a first surface of the laminate and a second forming member for forming a second surface of the laminate and that sandwiches a first region of the laminate between the first forming member and the second forming member to form the first region into a shape along a prescribed direction, and a first forming sheet that is disposed at a position facing a second region adjacent to the first region, that has one end fixed to the second forming member, and that has the other end fixed to a first prescribed position, and the first forming member has a first contact surface that is brought into contact with the first region of the laminate and that extends along the prescribed direction, and a first forming surface that is inclined at a first prescribed angle with respect to the prescribed direction, the method comprising:
a forming step of moving the first prescribed position to which the other end of the first forming sheet is fixed in a direction approaching the first forming surface to press the first forming sheet into the forming mold,
wherein in the forming step, the first prescribed position is brought closer to the first forming surface to execute a forming operation of pressing the first surface of the laminate against the first forming surface with the first forming sheet brought into contact with the second surface of the laminate to bend the laminate.
